# EUROPEAN PATENT APPLICATION

(11) **EP 1 253 043 A2**
(43) Date of publication of application: **30.10.2002**
(21) Application number: 02009142.7
(22) Date of filing: 24.04.2002
(51) Int. Cl.: B60Q 1/26

(54) **Lamp device for vehicle**

(30) Priority: 24.04.2001 JP 2001125806
(71) Applicant: ICHIKOH INDUSTRIES, LTD., Tokyo 141-0022 (JP)
(72) Inventor: Meguriya, Naoko, Isehara-shi, Kanagawa-ken 259-1192 (JP)
(74) Representative: Grünecker, Kinkeldey, Stockmair & Schwanhäusser Anwaltssozietät

(57) **Abstract**

A lamp device has a light source and an outer lens. The outer lens having a plurality of color areas which are transparent and colored or colorless. An arrangement is made such that the light emitted by the light source passes through at least two color areas, and the light after passing through the color areas takes on one function color although the light has passed through different color areas.

## Description

### FIELD OF THE INVENTION

The present invention relates to a lamp device for a vehicle which generates a light having a color corresponding to a function of a tail lamp, a stop lamp, a turn signal lamp, a back lamp or the like.

### BACKGROUND OF THE INVENTION

Various kinds of lamp devices such as head lamps, tail lamps are generally provided in vehicles. The head lamp irradiates a light having a white color or the like forward. The tail lamp irradiates a light having a red color for the purpose of increasing a visibility of its own car. As mentioned above, each of the lamp devices is configured such as to irradiate the light having the color corresponding to the function thereof.

Each of the lamp devices is configured such as to have one light source or a plurality of light sources when a combination lamp is employed, and have a transparent and colorless member or a transparent colored member covering the light source as an outer lens or in an inner side of the outer lens. Further, each of the lamp devices operates so as to serve as lighting, signing, making a signal or the like by presenting a predetermined color after the light from the light source passes through the transparent member.

However, in the lamp device for the vehicle, paying attention to one light source, it is viewed as one color in an outer appearance. This matter does not have difference between a time of turning on the light and a time of turning off the light. Incidentally, there is an instance that a visible color becomes different between a time of turning on the light and a time of turning off the light by providing the transparent member in an inner side of the outer lens. In any instance, in the lamp device for the vehicle, a predetermined function is achieved by one color (or the light having the color) observed at a time of turning on the light.

Although the predetermined function is achieved by the observed color, the color of achieving the function is not strict but has a chromaticity within a certain range. Accordingly, as far as satisfying the range, it is possible to intend to improve an appearance of the lamp device by emitting a plurality of lights having slightly different colors. If the lamp device emits the lights having a plurality of colors, it is possible to further draw attention of periphery such as drivers in the other cars, so that it is considered that a further improvement of safety is generated. Incidentally, in claims, a specification and drawings of this application, a color having the chromaticity within the certain range and achieving the predetermined function is called as a "function color", and as far as it exists within the certain range, the color is called as a "same function color" even if it has different chromaticity. That is, the function color may be a color defined on the basis of a standard.

### SUMMARY OF THE INVENTION

It is an object of this invention to provide a lamp device for a vehicle which is excellent in view of an appearance, can draw attention of a periphery, and can further improve a safety.

According to one aspect of the present invention, there is provided a lamp device for a vehicle comprising, an outer lens having a plurality of color areas which are transparent and colored or colorless, and a light source covered by the outer lens. Light emitted from the light source passes through at least two color areas, and the light passing through each of the color areas takes on one function color.

As a result, according to the above aspect, since the emitted light of the light source passes through at least two color areas and the light passing through each of the color areas takes on one function color, the light configured by at least two color (light configured by a plurality of colors having different chromaticity with each other) is observed when the light source achieving the predetermined function is turned on, so that the lamp device is excellent in an appearance, it is possible to further draw attention of the surrounding people and it is possible to intent further improvement of safety.

Other objects and features of this invention will become understood from the following description with reference to the accompanying drawings.

### BRIEF DESCRIPTION OF THE DRAWINGS

Fig. 1 is a perspective view of a motor vehicle which shows one example of an embodiment of a lamp device for a vehicle according to this invention,

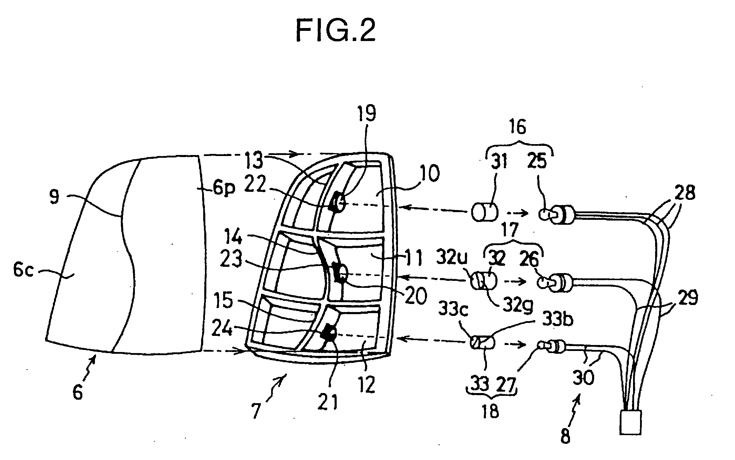

Fig. 2 is an exploded perspective view which shows the lamp device for the vehicle in Fig. 1,
Fig. 3 is a front elevational view which shows the lamp device for the vehicle in Fig. 1,
Fig. 4A is a cross sectional view along a line A-A in Fig. 3,
Fig. 4B is a cross sectional view along a line B-B in Fig. 3, and
Fig. 4C is a cross sectional view along a line C-C in Fig. 3.

### DETAILED DESCRIPTION

An embodiment of the lamp device for a vehicle according to this invention will be explained below with reference to the accompanying drawings.

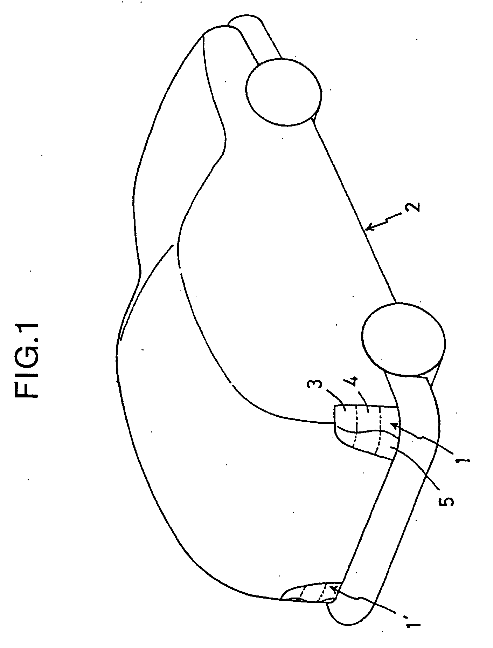

Fig. 1 shows lamp devices 1 and 1' for a vehicle according to this invention. The lamp devices 1 and 1' for the vehicle are rear combination lamps provided in a right rear section and a left rear section of a vehicle 2. A configuration of the lamp devices 1 and 1' for the vehicle are substantially the same except that they are bilaterally symmetrical. The lamp device 1 for the vehicle will explained below. Incidentally, an explanation about the lamp device 1' for the vehicle will be omitted.

The lamp device 1 for the vehicle is a rear combination lamp integrally provided with a tail/stop lamp 3, a turn signal lamp 4 and a back lamp 5. A two-dotted chain line in the drawing idiomatically expresses a boundary among the respective lamps 3, 4 and 5. The lamp device 1 for the vehicle is configured by an outer lens 6, a housing 7 and a harness assembly 8.

The outer lens 6 has a colorless (clear) color area 6c (that is, a first lens section) corresponding to a transparent and colorless color area, and a pink color area 6p (that is, a second lens section) corresponding to a transparent and colored color area. These two color areas 6c and 6p are sectioned by a boundary line 9 vertically crossing a center section of the outer lens 6.

Three lamp chambers 10, 11 and 12 corresponding to the tail/stop lamp 3, the turn signal lamp 4 and the back lamp 5 are respectively formed in the housing 7. The outer lens 6 is mounted to a front surface of the housing 7 as mentioned below. Ribs 13, 14 and 15 are provided in center sections of the lamp chambers 10, 11 and 12 in such a manner as to correspond to the boundary line 9 of the outer lens 6. Incidentally, the ribs 13, 14 and 15 may be curved in a substantially S shape as shown, or may be linear.

The respective lamp chambers 10, 11 and 12 are respectively sectioned into first lamp chambers 101, 111 and 121 corresponding to the color area 6c as the first lens section, and second lamp chambers 102, 112 and 122 corresponding to the color area 6p as the second lens section, by the ribs 13, 14 and 15.

An aluminum vapor deposition or a silver coating is applied to surfaces of respective back surfaces and respective side surfaces of the lamp chambers 10, 11 and 12, and surfaces of respective side surfaces of the ribs 13, 14 and 15, whereby reflection surfaces functioning as a reflector are respectively formed. Insertion holes 19, 20 and 21 and notch sections 22, 23 and 24 are respectively formed in respective back surfaces of the lamp chambers 10, 11 and 12 and the ribs 13, 14 and 15 so as to correspond to shapes of light sources 16, 17 and 18 mentioned below.

The harness assembly 8 has three electric light bulbs 25, 26 and 27, and the electric light bulbs 25, 26 and 27 are respectively used for the tail/stop lamp 3, the turn signal lamp 4 and the back lamp 5. Accordingly, three lead wires 28 are connected to the electric light bulb 25 so as to turn on the lamp in different brightness between an instance of being used as the tail lamp and an instance of being used as the stop lamp. Two lead wires 29 and 30 are respectively connected to the electric light bulbs 26 and 27.

A red inner cap 31 corresponding to a light emitting section is coated on the electric light bulb 25. The light source 16 is configured by the electric light bulb 25 and the inner cap 31. An inner cap 32 separated by color into an orange color (umber) corresponding to the first light emitting section and a green color corresponding to the second light emitting section is coated on the electric light bulb 26. The light source 17 is configured by the electric light bulb 26 and the inner cap 32. An inner cap 33 separated by color into an achromatic color (clear) corresponding to the first light emitting section and a blue color corresponding to the second light emitting section is coated on the electric light bulb 27. The light source 18 is configured by the electric light bulb 27 and the inner cap 33.

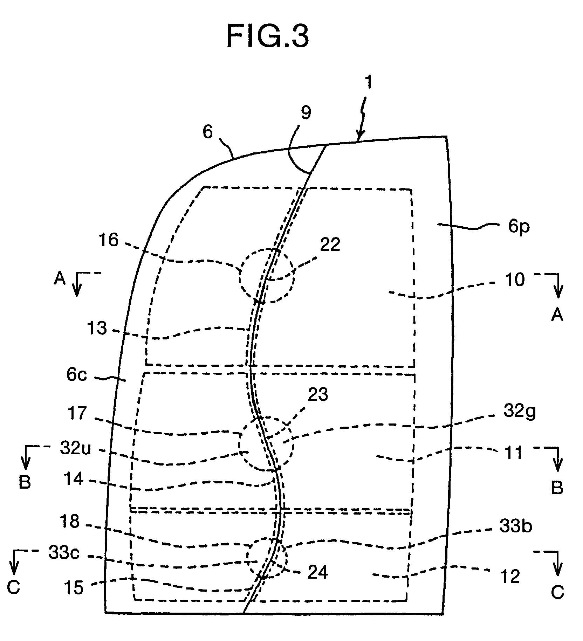

The outer lens 6 is attached to a front surface of the housing 7 according to an ultrasonic thermal welding. The light sources 16, 17 and 18 of the harness assembly 8 are inserted into the insertion holes 19, 20 and 21 from a rear side of the housing 7. As a result, as shown in Fig. 3, the lamp device 1 for the vehicle is manufactured.

The inner caps 31, 32 and 33 are positioned within the lamp chambers 10, 11 and 12 so as to pin in the notch sections 22, 23 and 24 of the ribs 13, 14 and 15. That is, the light sources 16, 17 and 18 are arranged astride the first lamp chambers 101, 111 and 121 and the second lamp chambers 102, 112 and 122.

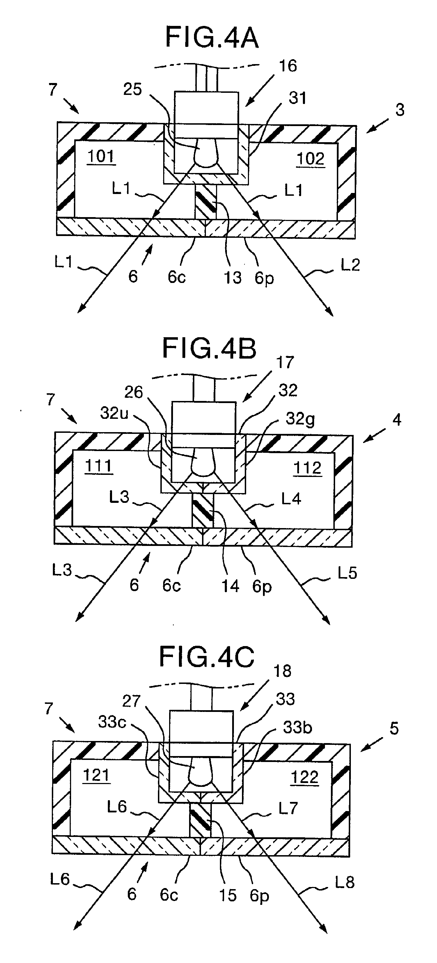

As shown in Figs. 3 and 4, in the inner cap 32, an orange section 32u corresponding to the first light emitting section is arranged so as to correspond to the first lamp chamber 111 in a left side of the rib 14 and the color area 6c corresponding to the first lens section. On the contrary, a green section 32g corresponding to the second light emitting section is arranged so as to correspond to the second lamp chamber 112 in a right side of the rib 14 and the color area 6p corresponding to the second lens section.

In the same manner, as shown in Figs. 3 and 4, in the inner cap 33, a white section 32c corresponding to the first light emitting section is arranged so as to correspond to the first lamp chamber 121 in a left side of the rib 15 and the color area 6c corresponding to the first lens section. On the contrary, a blue section 32b corresponding to the second light emitting section is arranged so as to correspond to the second lamp chamber 122 in a right side of the rib 15 and the color area 6p corresponding to the second lens section.

The lamp device 1 for the vehicle according to this embodiment is configured as mentioned above, and an operation and an effect thereof will be explained below.

The electric light bulb 25 of the light source 16 is turned on. Then, as shown in Fig. 4A, a light L1 having a red function color for the tail/stop lamp is irradiated from the inner cap 31 of the light emitting section in the light source 16. This red light L1 passes through each of the color area 6c and the color area 6p. The light L1 passing through the color area 6c takes on a red color of the light emitting section as it is. On the contrary, a light L2 passing through the color area 6p takes on a deep red color which is the same function color as the function color of the light emitting section and is different from the red color of the light emitting section, by adding the red color of the light emitting section and the pink color of the color area 6p. Accordingly, the red light L1 of the light emitting section is viewed as it is from the left side of the outer lens 6, and the deeper red light L2 is viewed from the right side of the outer lens 6. As a result, as a whole of the tail/stop lamp 3, two red color lights which are subtly different are emitted.

The electric light bulb 26 of the light source 17 is turned on. Then, as shown in Fig. 4B, a light L3 having an orange function color for the turn signal lamp is irradiated from the orange section 32u of the inner cap 32 of the first light emitting section in the light source 17. This orange light L3 passes through the color area 6c and takes on an orange color of the first light emitting section as it is. On the contrary, a green light L4 is irradiated from a green section 32g of the inner cap 32 in the second light emitting section of the light source 17. This green light L4 passes through the color area 6p. A light L5 passing through the color area 6p takes on an orange color which is the same function color as the function color of the first light emitting section and is different from the orange color of the first light emitting section, by adding (complementing) the green color of the second light emitting section and the pink color of the color area 6p. Accordingly, the orange light L3 of the first light emitting section is viewed as it is from the left side of the outer lens 6, and the orange light L5 combined by adding the green color and the pink color is viewed from the right side of the outer lens 6. As a result, as a whole of the turn signal lamp 4, two orange color lights which are subtly different are emitted. At this time, the orange light emitted from the section 32u of the inner cap 32 is shielded by the rib 14 and does not transmit through the color area 6p. The green light emitted from the section 32g of the inner cap 32 is shielded by the rib 14 and does not transmit through the color area 6c. Accordingly, the other colors than the color expected on the basis of the law or the like (in this instance, the orange color) are not viewed.

The additive color, that is, an additive complementary color means to mix a plurality of different colors with each other for the purpose of obtaining a desired function color. The mixed colors are called to have a mutually additive complementary color relationship.

The electric light bulb 27 of the light source 18 is turned on. Then, as shown in Fig. 4C, a light L6 having a white function color for the back lamp is irradiated from a white section 32c of the inner cap 33 in the first light emitting section of the light source 18. This white light L6 passes through the color area 6c and takes on a white color of the first light emitting section as it is. On the contrary, a blue light L7 is irradiated from a blue section 33b of the inner cap 33 in the second light emitting section of the light source 18. This blue light L7 passes through the color area 6p. A light L8 passing through the color area 6p takes on an orange color which is the same function color as the function color of the first light emitting section and is different from the white color of the first light emitting section, by adding (complementing) the blue color of the second light emitting section and the pink color of the color area 6p. Accordingly, the white light L6 of the first light emitting section is viewed as it is from the left side of the outer lens 6, and the white orange light L8 combined by adding the blue color and the pink color is viewed from the right side of the outer lens 6. As a result, as a whole of the back lamp 5, two white color lights which are subtly different are emitted. At this time, the white light emitted from the section 33c of the inner cap 33 is shielded by the rib 14 and does not transmit through the color area 6p. The blue light emitted from the section 33b of the inner cap 33 is shielded by the rib 14 and does not transmit through the color area 6c. Accordingly, the other colors than the color expected on the basis of the law or the like (in this instance, the white color) are not viewed.

The lamp device 1 for the vehicle according to this embodiment is configured such that the lights emitted from the light sources 16, 17 and 18 transmit two color areas 6c and 6p, and the lights L1 and L2, L3 and L5, and L6 and L8 passing through the respective color areas 6c and 6p take on the same function color. Accordingly, in the lamp device 1 for the vehicle according to this embodiment, when the light sources 16, 17 and 18 executing one or a plurality of predetermined functions are turned on, the lights L1 and L2, L3 and L5, L6 and L8 configured by two colors which are subtly different are observed. Therefore, in the lamp device 1 for the vehicle according to this embodiment, an appearance of the lamp device is excellent and it is possible to further draw the peripheral attention so as to intend to further improve a safety.

In the lamp device 1 for the vehicle according to this embodiment, the function color is combined on the basis of the additive color (the complementary additive color) of the colors of the lights emitted from the light sources 16, 17 and 18 and the pink color in the color area 6p of the outer lens 6. Accordingly, in the lamp device 1 for the vehicle according to this embodiment, it is not necessary to provide a filter independent from the light sources 16, 17 and 18 and the outer lens 6, for the purpose of combining the function color.

In the lamp device 1 for the vehicle according to this embodiment, the lights emitted from the light sources 16, 17 and 18 (including wholly emitted lights and partly emitted lights) themselves take on the function colors comprising the red color, the orange color and the white color so as to transmit through the color area 6c as they are, and on the contrary, changes into the colors which are the same function colors as the original function colors and are different from the original color, at a time of passing through the color area 6p. Accordingly, in the lamp device 1 for the vehicle according to this embodiment, the colors of the lights emitted from the light sources 16, 17 and 18 are employed as they are for one color among a plurality of colors of the observed lights, and the effect can be achieved simply and at a low cost.

In the lamp device 1 for the vehicle according to this embodiment, since the white color in the color area 6c of the outer lens 6 and the pink color in the color area 6p are viewed when the lamp device 1 is not turned on, it is possible to match the color of the outer lens 6 with the color of the vehicle body in view of a design.

In the lamp device 1 for the vehicle according to this embodiment, since the color of the outer lens 6 at a time when the lamp device 1 is not turned on, and the color of the outer lens 6 at a time when the lamp device 1 is turned on are different, it is possible to prevent a dummy lighting at a time when the lamp device 1 is not turned on.

This invention is not limited to the above embodiment, the configuration may be made, for example, such that the outer lens 6 does not always have the transparent and colorless color area, or the outer lens 6 has three or more color areas.

The lamp device 1 for the vehicle according to this embodiment is explained about the rear combination lamp integrally provided with the tail/stop lamp 3, the turn signal lamp 4 and the back lamp 5. However, the present invention may be one lamp among the tail/stop lamp 3, the turn signal lamp 4 and the back lamp 5, or may be optionally combined two lamps. This invention may be the other lamps than the tail/stop lamp 3, the turn signal lamp 4 and the back lamp 5, or may be a lamp obtained by combining two or more lamps.

The lamp device 1 for the vehicle according to this embodiment is obtained by combining the tail/stop lamp 3, the turn signal lamp 4 and the back lamp 5 vertically. However, this invention may be obtained by combining the tail/stop lamp 3, the turn signal lamp 4 and the back lamp 5 laterally, or may be obtained by combining them vertically and laterally.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A lamp device for a vehicle comprising:
an outer lens having a plurality of color areas which are transparent and colorless or transparent and colored; and
a light source covered by the outer lens,
wherein light emitted from the light source passes separately through at least two of the color areas, and the light coming out of the color areas takes on one function color.

2. The lamp device for a vehicle according to claim 1, wherein the outer lens has the transparent and colored color area, and the light passing through the transparent and colored color area takes on a function color which is obtained by addition of a color of the light emitted from the light source and a color of the transparent and colored color area.

3. The lamp device for a vehicle according to claim 1, wherein the outer lens has the transparent and colorless color area and a transparent and colored color area, and the light emitted from the light source takes on a certain function color, and the light passing through the transparent and colored color area takes on the same function color as the function color of the emitted light and a color different from a color of the emitted light by adding a color of the light emitted from the light source and a color of the transparent and colored color area.

4. The lamp device for a vehicle according to claim 1, wherein the outer lens has the transparent and colorless color area and a transparent and colored pink color area, and the light emitted from the light source takes on a red function color of a tail/stop lamp, the light having the red function color of the tail/stop lamp passes each of the transparent and colorless color area and the transparent and colored pink color area, the light passing through the transparent and colorless color area passes as it is, and the light passing through the transparent and colored pink color area takes on a deep red color which is the same function color as the function color of the emitted light and is different from a red color of the emitted light by adding a red color of the light emitted from the light source and a pink color of the transparent and colored color area.

5. The lamp device for a vehicle according to claim 1, wherein the outer lens has the transparent and colorless color area and a transparent and colored pink color area, and the light emitted from the light source takes on an orange function color of a turn signal lamp and a green color, the light having the orange function color of the turn signal lamp passes the transparent and colorless color area as it is, the green light passes through the transparent and colored pink color area, and the light passing through the transparent and colored pink color area takes on an orange color which is the same function color as the orange function color of the turn signal lamp and is different from the orange color passing through the transparent and colorless color area as it is by adding a green color of the light emitted from the light source and a pink color of the transparent and colored color area.

6. The lamp device for a vehicle according to claim 1, wherein the outer lens has the transparent and colorless color area and a transparent and colored pink color area, and the light emitted from the light source takes on a white function color of a back lamp and a blue color, the light having the white function color of the back lamp passes the transparent and colorless color area as it is, the blue light passes through the transparent and colored pink color area, and the light passing through the transparent and colored pink color area takes on an orange color which is the same function color as the white function color of the back lamp and is different from the white color passing through the transparent and colorless color area as it is by adding a blue color of the light emitted from the light source and a pink color of the transparent and colored color area.

7. The lamp device comprising:
a light source and an outer lens that covers the light source, wherein at least two of the following three conditions (a) to (c) are satisfied
(a) the outer lens has a transparent and colorless color area and a transparent and colored pink color area, and the light emitted from the light source takes on a red function color of a tail/stop lamp, the light having the red function color of the tail/stop lamp passes each of the transparent and colorless color area and the transparent and colored pink color area, the light passing through the transparent and colorless color area passes as it is, and the light passing through the transparent and colored pink color area takes on a deep red color which is the same function color as the function color of the emitted light and is different from a red color of the emitted light by adding a red color of the light emitted from the light source and a pink color of the transparent and colored color area;
(b) the outer lens has a transparent and colorless color area and a transparent and colored pink color area, and the light emitted from the light source takes on an orange function color of a turn signal lamp and a green color, the light having the orange function color of the turn signal lamp passes the transparent and colorless color area as it is, the green light passes through the transparent and colored pink color area, and the light passing through the transparent and colored pink color area takes on an orange color which is the same function color as the orange function color of the turn signal lamp and is different from the orange color passing through the transparent and colorless color area as it is by adding a green color of the light emitted from the light source and a pink color of the transparent and colored color area; and
(c) the outer lens has a transparent and colorless color area and a transparent and colored pink color area, and the light emitted from the light source takes on a white function color of a back lamp and a blue color, the light having the white function color of the back lamp passes the transparent and colorless color area as it is, the blue light passes through the transparent and colored pink color area, and the light passing through the transparent and colored pink color area takes on an orange color which is the same function color as the white function color of the back lamp and is different from the white color passing through the transparent and colorless color area as it is by adding a blue color of the light emitted from the light source and a pink color of the transparent and colored color area.

8. The lamp device for a vehicle according to claim 1, further comprising:
an outer lens and a housing forming a lamp chamber;
a rib sectioning the lamp chamber into a first lamp chamber and a second lamp chamber; and
a light source arranged astride the first lamp chamber and the second lamp chamber,
wherein the outer lens has a first lens section in a transparent and colorless color area corresponding to the first lamp chamber, and a second lens section in a transparent and colored pink color area corresponding to the second lamp chamber,
the light source has a light emitting section taking on a red function color of a tail/stop lamp,
the light having the red function color of the tail/stop lamp emitted from the light emitting section passes through each of the first lens section and the second lens section,
the light passing through the first lens section takes on a red color of the light emitting section as it is, and
the light passing through the second lens section takes on a deep red color which is the same function color as the function color of the light emitting section and is different from the red color of the light emitting section, by adding the red color of the light emitting section and the pink color of the second lens section.

9. The lamp device for a vehicle according to claim 1, further comprising:
an outer lens and a housing forming a lamp chamber;
a rib sectioning the lamp chamber into a first lamp chamber and a second lamp chamber; and
a light source arranged astride the first lamp chamber and the second lamp chamber,
wherein the outer lens has a first lens section in a transparent and colorless color area corresponding to the first lamp chamber, and a second lens section in a transparent and colored pink color area corresponding to the second lamp chamber,
the light source has a first light emitting section corresponding to the first lamp chamber and the first lens section and taking on an orange function color of a turn signal lamp, and a second light emitting section corresponding to the second lamp chamber and the second lens section and taking on a green color,
the light having the orange function color of the turn signal lamp emitted from the first light emitting section passes through the first lens section and takes on the orange color of the first light emitting section as it is,
the green light emitted from the second light emitting section passes through the second lens, and
the light passing through the second lens section takes on an orange color which is the same function color as the function color of the first light emitting section and is different from the orange color passing through the first lens section as it is, by adding the green color of the second light emitting section and the pink color of the second lens section.

10. The lamp device for a vehicle according to claim 1, further comprising:
an outer lens and a housing forming a lamp chamber;
a rib sectioning the lamp chamber into a first lamp chamber and a second lamp chamber; and
a light source arranged astride the first lamp chamber and the second lamp chamber,
wherein the outer lens has a first lens section in a transparent and colorless color area corresponding to the first lamp chamber, and a second lens section in a transparent and colored pink color area corresponding to the second lamp chamber,
the light source has a first light emitting section corresponding to the first lamp chamber and the first lens section and taking on a white function color of a back lamp, and a second light emitting section corresponding to the second lamp chamber and the second lens section and taking on a blue color,
the light having the white function color of the back lamp emitted from the first light emitting section passes through the first lens section and takes on the white color of the first light emitting section as it is,
the blue light emitted from the second light emitting section passes through the second lens, and
the light passing through the second lens section takes on an orange color which is the same function color as the function color of the first light emitting section and is different from the white color passing through the first lens section as it is, by adding the blue color of the second light emitting section and the pink color of the second lens section.

11. The lamp device comprising at least two of the first to third lamps,
the first lamp having
an outer lens and a housing forming a lamp chamber;
a rib sectioning the lamp chamber into a first lamp chamber and a second lamp chamber; and
a light source arranged astride the first lamp chamber and the second lamp chamber,
wherein the outer lens has a first lens section in a transparent and colorless color area corresponding to the first lamp chamber, and a secondlens section in a transparent and colored pink color area corresponding to the second lamp chamber,
wherein the light source has a light emitting section taking on a red function color of a tail/stop lamp, the light having the red function color of the tail/stop lamp emitted from the light emitting section passes through each of the first lens section and the second lens section, the light passing through the first lens section takes on a red color of the light emitting section as it is, and the light passing through the second lens section takes on a deep red color which is the same function color as the function color of the light emitting section and is different from the red color of the light emitting section, by adding the red color of the light emitting section and the pink color of the second lens section.
the second lamp having
an outer lens and a housing forming a lamp chamber;
a rib sectioning the lamp chamber into a first lamp chamber and a second lamp chamber; and
a light source arranged astride the first lamp chamber and the second lamp chamber,
wherein the outer lens has a first lens section in a transparent and colorless color area corresponding to the first lamp chamber, and a second lens section in a transparent and colored pink color area corresponding to the second lamp chamber,
wherein the light source has a first light emitting section corresponding to the first lamp chamber and the first lens section and taking on an orange function color of a turn signal lamp, and a second light emitting section corresponding to the second lamp chamber and the second lens section and taking on a green color, the light having the orange function color of the turn signal lamp emitted from the first light emitting section passes through the first lens section and takes on the orange color of the first light emitting section as it is, the green light emitted from the second light emitting section passes through the second lens, and the light passing through the second lens section stakes on an orange color which is the same function color as the function color of the first light emitting section and is different from the orange color passing through the first lens section as it is, by adding the green color of the second light emitting section and the pink color of the second lens section.
the third lamp having
an outer lens and a housing forming a lamp chamber;
a rib sectioning the lamp chamber into a first lamp chamber and a second lamp chamber; and
a light source arranged astride the first lamp chamber and the second lamp chamber,
wherein the outer lens has a first lens section in a transparent and colorless color area corresponding to the first lamp chamber, and a second lens section in a transparent and colored pink color area corresponding to the second lamp chamber,
wherein the light source has a first light emitting section corresponding to the first lamp chamber and the first lens section and taking on a white function color of a back lamp, and a second light emitting section corresponding to the second lamp chamber and the second lens section and taking on a blue color, the light having the white function color of the back lamp emitted from the first light emitting section passes through the first lens section and takes on the white color of the first light emitting section as it is, the blue light emitted from the second light emitting section passes through the second lens, and the light passing through the second lens section takes on an orange color which is the same function color as the function color of the first light emitting section and is different from the white color passing through the first lens section as it is, by adding the blue color of the second light emitting section and the pink color of the second lens section.
